Europäisches Patentamt

European Patent Office

Office européen des brevets

(19)

(11) Veröffentlichungsnummer : **0 423 593 B1**

## (12) EUROPÄISCHE PATENTSCHRIFT

(45) Veröffentlichungstag der Patentschrift :
**18.11.93 Patentblatt 93/46**

(21) Anmeldenummer : **90119314.4**

(22) Anmeldetag : **09.10.90**

(51) Int. Cl.⁵ : **C08L 15/00,** C08L 11/00,
// (C08L15/00, 11:00),
(C08L11/00, 15:00)

(54) Kautschukmischungen aus Polychloropren und hydriertem Nitrilkautschuk.

(30) Priorität : **20.10.89 DE 3934954**

(43) Veröffentlichungstag der Anmeldung :
**24.04.91 Patentblatt 91/17**

(45) Bekanntmachung des Hinweises auf die
Patenterteilung :
**18.11.93 Patentblatt 93/46**

(84) Benannte Vertragsstaaten :
**DE FR GB IT**

(56) Entgegenhaltungen :
**EP-A- 0 270 020
DE-A- 1 910 770
DATABASE WPIL, Nr. 90-080361, Derwent Publications Ltd, London, GB; & JP-A-2 034 644
(NIPPON OIL SEAL IND.) 05-02-1990
DATABASE WPIL, Nr. 83-831942, Derwent Publications Ltd, London, GB; & SU-A-994 503
(A.I. ZELENSKII et al.) 07-02-1983**

(73) Patentinhaber : **BAYER AG
D-51368 Leverkusen (DE)**

(72) Erfinder : **Musch, Rüdiger, Dr.
Altenberger Domstrasse 169
W-5060 Bergisch Gladbach 2 (DE)**
Erfinder : **Thörmer, Joachim, Dr.
Emil-Nolde-Strasse 39
W-5090 Leverkusen (DE)**
Erfinder : **Buding, Hartmuth, Dr.
Liebermannstrasse 1
W-4047 Dormagen (DE)**
Erfinder : **Leibbrandt, Friedrich, Dr.
Buscher Hof 46
W-5067 Kürten-Busch (DE)**

**Beschreibung**

Die Erfindung betrifft vulkanisierbare Kautschukmischungen enthaltend Polychloropren und hydrierten Nitrilkautschuk (nachfolgend: "HNBR") und die Vulkanisate dieser Mischungen. Die Vulkanisate zeichnen sich durch eine hohe dynamische Belastbarkeit aus.

Unter "hydriertem Nitrilkautschuk" oder "HNBR" sollen im Sinne dieser Erfindung Nitrilkautschuke, deren C=C-Doppelbindungen selektiv (d.h. ohne Hydrierung der C≡N-Dreifachbindung) teilweise oder vollkommen hydriert sind, verstanden werden.

Hydrierter Nitrilkautschuk zeichnet sich durch hohe Reißfestigkeit, geringen Abrieb, niedrig bleibende Verformungen nach Druck- und Zugbeanspruchung und gute Ölbeständigkeit, vor allem aber durch bemerkenswerte Stabilität gegen thermische und oxidative Einflüsse aus.

Eine für viele Anwendungen sehr wichtige Eigenschaft ist der Spannungswert ("Modul") eines Vulkanisats, d.h. die für eine definierte Deformation (z.B. 300 % Dehnung) erforderliche Kraft. Der Spannungswert steigt mit der Zahl der Vernetzungsstellen im Vulkanisat. Die dynamische Belastbarkeit von Vulkanisaten, beispielsweise ausgedrückt als Zyklenzahl im Dauerknickversuch, sinkt üblicherweise mit steigendem Spannungswert, so das man in der Regel entscheiden muß, welcher der beiden Eigenschaften zu Lasten der anderen Vorrang eingeräumt werden soll.

Überraschenderweise wurde nun gefunden, das die dynamische Belastbarkeit von Vulkanisaten aus Polychloropren/HNBR-Mischungen dieser Erfahrung nicht gehorcht, sondern ein Maximum durchläuft. Die Erkenntnis dieses Phänomens gestattet das Bereitstellen von Vulkanisaten mit einer glücklichen Kombinationen von hohem Spannungswert und hoher dynamischer Belastbarkeit.

Gegenstand der Erfindung sind also Mischungen aus

A) 15 bis 70, vorzugsweise 20 bis 60, Gew.-% Polychloropren und

B) 85 bis 30, vorzugsweise 80 bis 40, Gew.-% hydriertem Nitrilkautschuk,

wobei sich die Prozentangaben jeweils auf die Summe der Komponenten A) + B) beziehen.

Weiterer Gegenstand der Erfindung sind die Vulkanisate dieser Mischungen.

Geeignete Polychloroprene A sind Chloroprenpolymerisate, die neben polymerisierten 2-Chloropreneinheiten 0,05 bis 30, vorzugsweise 0,1 bis 20 Gew.-%, bezogen auf Chloroprenpolymerisat, copolymerisierte Einheiten anderer ethylenisch ungesättigter Monomerer oder Schwefel enthalten können, also Polychloroprene, wie sie beispielsweise in "Methoden der Organischen Chemie" (Houben-Weyl) Bd. E20/2, 842-859, Georg Thieme Verlag, Stuttgart - New York 1987, beschrieben sind.

Sie besitzen im allgemeinen Mooney-Viskositäten (nach DIN 53 523) von 5 bis 140, vorzugsweise von 20 bis 120, (ML 1+4)/100°C und Glasübergangstemperaturen von unter -25°C.

Bevorzugte, mit Chlopren copolymerisierbare, ethylenisch ungesättigte "andere Monomere" sind im wesentlichen 2,3-Dichlorbutadien und 1-Chlorbutadien. Schwefelmodifizierte Polychloroprene A sind bevorzugt.

Die Menge an elementarem Schwefel, die für die Herstellung schwefelmodifizierten Polychloroprens verwendet wird, beträgt 0,05 bis 1,5, vorzugsweise 0,1 bis 1, Gew.-%, bezogen auf eingesetzte Monomere. Bei der Verwendung von Schwefelspendern ist deren Menge so zu bemessen, daß der freiwerdende Schwefel den oben angegebenen Mengen entspricht.

Die Polychloroprene A können unvernetzt, d.h. Toluol-löslich, oder vernetzt sein. Die Vernetzung kann durch erhöhten Monomerumsatz oder durch Zusatz vernetzend wirkender Monomerer bei der Polymerisation erreicht werden.

Die Herstellung der Polychloroprene A kann auf an sich bekannte Weise, z.B. durch Emulsionspolymerisation bei 0 bis 70°C, vorzugsweise bei 5 bis 50°C erfolgen.

Zur Viskositätsregelung der Polychloroprene A kann die Herstellung in Gegenwart üblicher Kettenübertragungsmittel wie Mercaptane, wie sie z.B. in DE-OS 30 02 711, GB-PS 1 048 235, FR-PS 2 073 106 beschrieben sind, oder wie Xanthogendisulfide, wie sie z.B. in der DE-AS 1 186 215, in den DE-OS 21 56 453, 23 06 610 und 30 44 811, in der EP-PS 53 319, in den GB-PS 512 458 und 952 156 und in den US-PS 2 321 693 und 2 567 117 beschrieben sind, erfolgen.

Bei schwefelmodifizierten Polychloroprenen A kann die gewünschte Viskosität durch Verwendung üblicher Peptisationsmittel, wie sie beispielsweise in den DE-OS 1 911 439, 2 018 736, 2 755 074 und 3 246 748, in der DE-PS 2 645 920, in den EP-A 21 212 und 200 857, in der FR-PS 1 457 004 und in den US-PS 2 264 713, 3 378 538, 3 397 173 und 3 507 825 beschrieben sind, eingestellt werden.

Die Polychloroprene A können selbstverständlich auch aus Mischungen verschiedener Chloroprenpolymerisate bestehen.

Bevorzugte hydrierte Nitrilkautschuke B sind solche mit einem Hydriergrad, bezogen auf die vom Butadien stammenden C=C-Doppelbindungen, von mindestens 80, bevorzugt von mindestens 95, insbesondere von mindestens 98 %. Der Hydriergrad läßt sich IR-spektroskopisch bestimmen; vgl. D. Brück in Kautschuk, Gum-

2

mi, Kunststoffe <u>42</u>, Nr.2, S. 107-110 (1989).

Den hydrierten Nitrilkautschuken B liegen Butadien/Acrylnitril-Copolymerisate mit einem Gehalt an copolymerisiertem Acrylnitril von 5 bis 60, vorzugsweise 10 bis 50 Gew.-% zugrunde.

Die hydrierten Nitrilkautschuke B besitzen in der Regel Mooney-Viskositäten (DIN 53 523) von 10 bis 150, vorzugsweise von 25 bis 90 (ML 1+4)/100°C.

Das Mischen der Komponenten A) und B) kann auf üblichen Mischaggregaten erfolgen. Bevorzugte Mischaggregate sind die in der Kautschukindustrie üblichen Kneter, Walzen, Innenmischer und Mischextruder, die in der Regel mit Scherraten von 1 bis 1000 sec$^{-1}$, vorzugsweise 1 bis 200 sec$^{-1}$ arbeiten.

Den erfindungsgemäßen Mischungen können übliche Füllstoffe und Hilfsmittel, wie beispielsweise Weichmacher, Harze, Faktisse und Stabilisatoren zur Erzielung bestimmter Rohmischungs- oder Vulkanisateigenschaften zugesetzt werden.

Für die meisten Anwendungen setzt man die erfindungsgemäßen Mischungen in vulkanisierter Form ein. Die Vulkanisation kann - gegebenenfalls nach Zugabe von Füllstoffen, Stabilisatoren etc. - z.B. durch energiereiche Strahlung oder durch Vernetzung mit Schwefel oder Schwefelspendern, mit Peroxiden und/oder mit mehrfunktionellen, vernetzend wirkenden Verbindungen (wie z.B. Triallylcyanurat, Triallylisocyanurat, Bismaleinimiden oder Divinylbenzol) erfolgen. Schwefel-und Peroxidvulkanisation werden bevorzugt.

Ausführliche Beschreibungen von Schwefelvulkanisiersystemen finden sich bei W. Hofmann, "Vulkanisation und Vulkanisationshilfsmittel", Verlag Berliner Union GmbH, Stuttgart 1965 und bei Alliger und Sjothun, "Vulcanization of Elastomers", Reinhold Pub. Corp. New York 1964. Geeignete Schwefelspender umfassen Thiurampolysulfide wie z.B. Dipentamethylenthiuram-tetra- und -hexasulfid, Tetramethylthiuram-disulfid; Amindisulfide wie z.B. Dimorpholyldisulfid; Natriumpolysulfide und Thioplaste.

Bevorzugte Schwefelvulkanisiersysteme enthalten

a) Schwefel oder Schwefelspender,

b) gegebenenfalls Vulkanisationsbeschleuniger und

c) gegebenenfalls einen oder mehrere Aktivatoren.

Als Menge a) verwendet man in der Regel 0,2 bis 3,0 Gew.-% Schwefel (im Falle von Schwefelspender: berechnet als freiwerdender Schwefel), bezogen auf Kautschuk. Auch Schwefel- modifiziertes Polychloropren kann als Schwefelspender fungieren.

Die Vulkanisationsbeschleuniger b) verwendet man im allgemeinen in Mengen von 1 bis 3,5 Gew.-%, bezogen auf Kautschuk. Bevorzugte Vulkanisationsbeschleuniger b) umfassen Thiazolbeschleuniger wie
2-Mercaptobenzothiazol,
Dibenzothiazyl-disulfid,
Benzothiazyl-2-cyclohexylsulfenamid (CBS),
Benzothiazyl-2-tert.-butylsulfenamid (TBBS),
N-Morpholinothio-2-benzothiazol (MBS),
Benzothiazyl-2-diisopropylsulfenamid (DIBS),
Benzothiazyl-2-tert.-amylsulfenamid (AMZ),
Benzothiazyl-dicyclohexylsulfenamid (DCBS) und
Morpholino-thiocarbonyl-sulfenmorpholid (OTOS).

Weitere bevorzugte Vulkanisationsbeschleuniger b) umfassen Diphenylguanidin (DPG) und Di-o-tolylguanidin (DOTG); Thiurame wie Thiurammono- und -disulfide; und Dithiocarbamate, sowie Thiophosphate und deren Derivate und Salze, wie z.B. ihre Zinksalze.

Die bedeutendsten Aktivatoren c) sind die Metalloxide, insbesondere Zinkoxid. In einzelnen Fällen wird auch Magnesiumoxid oder Calciumhydroxid verwendet.

Für die Peroxidvulkanisation bevorzugte Peroxide umfassen
Dialkylperoxide,
Ketalperoxide,
Aralkylperoxide,
Peroxidester,
Peroxidether; wie z.B.
z.B. Di-tert.-butylperoxid,
Bis-(tert.-butylperoxiisopropyl)-benzol,
Dicumylperoxid,
2,5-Dimethyl-2,5-di(tert.-butylperoxy)-hexan,
2,5-Dimethyl-2,5-di(tert.-butylperoxy)-hexen-(3),
1,1-Bis(tert.-butylperoxy)-3,3,5-trimethyl-cyclohexan,
Benzoylperoxid,
tert.-Butylcumylperoxid und

tert.-Butylperbenzoat.

Die Peroxidmengen liegen vorzugsweise im Bereich von 4 bis 8 Gew.-%, bezogen auf Kautschuk.

Die Vulkanisation kann bei Temperaturen von 100 bis 200°C, vorzugsweise 130 bis 180°C, gegebenenfalls unter einem Druck von 10 bis 200 bar, erfolgen. Im Anschluß an die Vulkanistion können die Vulkanisate durch Lagerung bei höherer Temperatur getempert werden.

"Vulkanisiert" im Sinne der Erfindung bedeutet, daß bei Extraktion im Soxhlet-Aufsatz mit Tetrahydrofuran (10 Stunden), gefolgt von Chlorbenzol (10 Stunden) als Extraktionsmittel weniger als 10, vorzugsweise weniger als 5 Gew.-%, bezogen auf die Summe der Komponenten A) und B), extrahierbar ist.

Die erfindungsgemäßen Kautschukmischungen zeichnen sich unter anderem durch eine ausgezeichnete Fließfähigkeit und durch eine verbesserte Verarbeitungssicherheit (verlängerte Mooney-Scorch-Zeiten) aus.

Die erfindungsgemäßen Kautschukmischungen eignen sich besonders zur Herstellung von Vulkanisaten, die dynamisch hoch belastbar sein müssen: Dichtungen, Schläuche, Membranen, Antriebsriemen, Manschetten, Kabelmäntel etc.

Die in den nachfolgenden Beispielen angegebenen Teile sind Gewichtsteile; Prozentangeben beziehen sich auf das Gewicht.

Beispiele

Ausgangsprodukte:

HNBR 1

Aus einem Nitrilkautschuk mit einem Gehalt an copolymerisiertem Acrylnitril von 34 % durch Hydrierung hergestelltes Produkt mit einem Hydriergrad der C=C-Doppelbindungen von 95,7 % und einer Mooney-Viskosität von 60 (ML 1+4) 100°C (®Therban 1706 S der Bayer AG).

Polychloropren 2

Schwefel- modifiziertes Produkt, das, wie folgt, hergestellt wurde:

In einem 20 l-Kolben wurde die wäßrige Phase bestehend aus 120 Teilen entsalztem Wasser, 3,25 Teilen unmodifizierter Harzsäure auf Wurzelharzbasis, 0,9 Teilen Kaliumhydroxid, 0,7 Teilen des Na-Salzes des Kondensationsproduktes aus Naphthalinsulfonsäure und Formaldehyd und 0,03 Teilen Na-Salz der Anthrachinon-β-sulfonsäure vorgelegt, mit Stickstoff gespült und auf 40°C aufgeheizt. Dann wurden 100 Teile mit Stickstoff gespültes Chloropren zugegeben. Nach Einstellung einer Temperatur von 40°C wurden 0,3 Teile Schwefel (50 %ige wäßrige Dispersion) zugegeben. Dann wurden 0,9 Teile Na-Dibutyldithiocarbamat (30 %ige wäßrige Lösung) zugesetzt.

Die Aktivierung erfolgte mit 0,03 Teilen $K_2S_2O_8$ in Form einer mit Stickstoff gespülten 4 %igen wäßrigen $K_2S_2O_8$-Lösung. Während des Versuches wurden $2,25 \cdot 10^{-3}$ Teile $K_2S_2O_8$ pro Minute in Form dieser wäßrigen und mit Stickstoff gespülten Persulfatlösung zudosiert.

Der Verlauf der Polymerisation wurde gravimetrisch an gezogenen Proben verfolgt. Bei einem Monomerumsatz von 66 % wurde mit 0,03 Teilen, bezogen auf Latex, einer 2,5 %igen Lösung von Diethylhydroxylamin abgestoppt und der Latex mit 1,0 Teil Tetraethylthiuramdisulfid (TETD) versetzt (toluolische Emulsion).

Der Latex wurde auf ca. 500 ppm Restchloropren (bezogen auf Latex) entgast, der entgaste Latex mit 20 %iger Essigsäure auf pH 6 gestellt, das Polymere durch Gefrierkoagulation isoliert, mit entsalztem Wasser gewaschen und bis zu einer Restfeuchte von ≤0,5 % getrocknet. Das Polymere wies eine Mooney-Viskosität von 44 (ML 1+4) 100°C auf.

# Rezepturen und Mischungsherstellung

| Beispiele | 1* | 2* | 3 | 4 | 5 | 6* | 7* | 8* |
|---|---|---|---|---|---|---|---|---|
| HNBR 1 | 100 | 90 | 80 | 60 | 40 | 20 | 10 | - |
| Polychloropren 2 | - | 10 | 20 | 40 | 60 | 80 | 90 | 100 |
| I Zinkoxid | 5 | | | | | | | 5 |
| Magnesiumoxid | 4 | | | | | | | 4 |
| Stearinsäure | 1 | | Die einzelnen Anteile ergeben sich | | | | | 1 |
| Octyliertes Diphenylamin | 2 | | aus den Verschnittverhältnissen | | | | | 2 |
| Ruß N762 | 60 | | | | | | | 60 |
| Verteilungshilfsmittel | 2 | | | | | | | 2 |
| TOTM | 10 | | | | | | | 10 |
| II TMTD | 2 | 1,9 | 1,8 | 1,6 | 1,4 | 1,2 | 1,1 | 1 |
| CBS | 0,5 | 0,45 | 0,4 | 0,3 | 0,2 | 0,1 | 0,05 | - |
| Schwefel | 0,5 | 0,45 | 0,4 | 0,3 | 0,2 | 0,1 | 0,05 | - |

*) Vergleichsbeispiele

Die Mischungen 1 und 8 wurden in einem Laborkneter hergestellt, wobei der Kneter bei Mischung 1 auf 50°C (Kühlwasser) und bei Mischung 8 auf 30°C aufgewärmt wurde.

Verwendete Chemikalien

Magnesiumoxid: ®Maglite DE der Fa. Merck + Co. Inc., USA
Octyliertes Diphenylamin: ®Vulkanox OCD der Bayer AG, Leverkusen
Ruß N 762: ®Regal der Fa. Cabot GmbH, Hanau
Verteilungshilfsmittel: ®Aflux 42 der Fa. Rhein-Chemie, Rheinau

EP 0 423 593 B1

TOTM:               Weichmacher ®Witamol 218 der Fa. Dynamit Nobel
Zinkoxid:         ®Zinkoxyd aktiv der Bayer AG, Leverkusen
TMTD:            ®Vulkacit Thiuram der Bayer AG, Leverkusen
CBS:              ®Vulkacit CZ der Bayer AG, Leverkusen
ETU:              ®Vulkacit NPV/C der Bayer AG, Leverkusen
Schwefel:         ®Rhenocure JS 60/5 der Rhein-Chemie, Rheinau

Mischfolge

```
Mischung 1:   Kautschuk                          1 min.

              Füllstoffe + Bestandteile I + II   4 min.

              volle Kühlung                      5 min.

              TMTD und CBS, entleeren            6 min.
```

Die Zugabe von TMTD und CBS erfolgte bei einer Massetemperatur von ca. 100°C.

Mischfolge

```
Mischung 8:   Kautschuk                         0,5 min.

              alles außer Zinkoxid u. TMTD      1,5 min.

              Zinkoxid                          2   min.

              entleeren; auf einer Laborwalze und bei

              ca. 95°C Massetemperatur TMTD aufmischen.
```

Zur Herstellung der Beispiele 2 bis 7 wurden jeweils die entsprechenden Anteile der Mischungen 1 und 8 auf einer Laborwalze verschnitten.

Dynamisches Verhalten

(Bestimmung der Rißbildung nach De-Mattia)

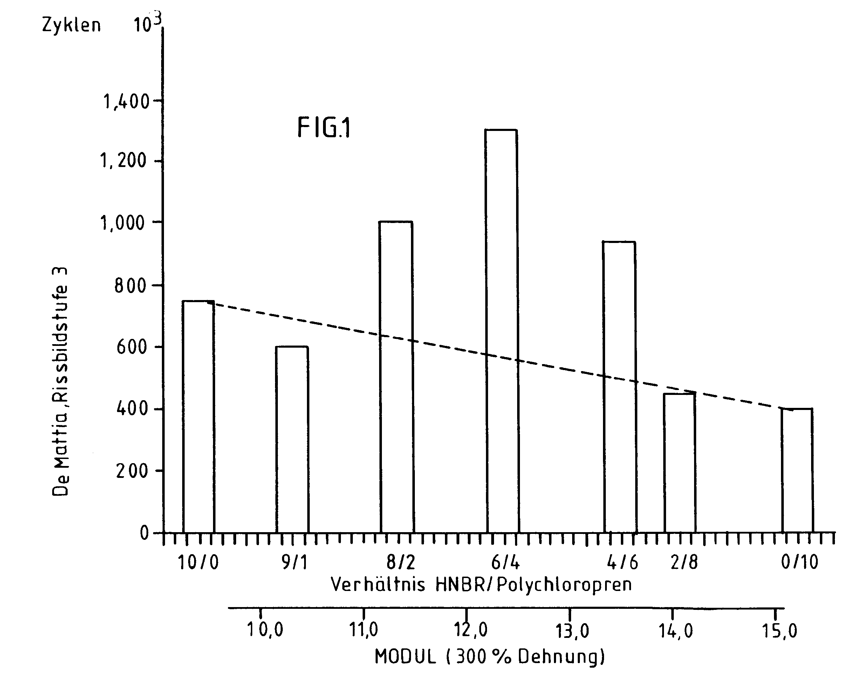

Der Dauerknick-Versuch mit der De-Mattia-Maschine wurde nach DIN 53 522 ausgeführt. Ausgewertet wurde die Anzahl an Zyklen bis zur Rißbildung für die in der Norm angegebenen Stufen. Die Zyklenzahlen aller Stufen wurden dann gemittelt.
Die Ergebnisse sind in Abb. 1 dargestellt.

**Patentansprüche**

1.   Mischungen aus
    A) 15 bis 70 Gew.-% Polychloropren und
    B) 85 bis 30 Gew.-% hydriertem Nitrilkautschuk,
  wobei sich die Prozentangaben jeweils auf die Summe der Komponenten A) + B) beziehen.

2.   Mischungen nach Anspruch 1 aus
  20 bis 60 Gew.-% A und
  80 bis 40 Gew.-% B.

3.   Vulkanisate aus Mischungen nach Ansprüchen 1 und 2.

## Claims

1. Compounds of
    A) 15 to 70% by weight polychloroprene and
    B) 85 to 30% by weight hydrogenated nitrile rubber,
    the percentages being based on the sum of components A) + B).

2. Compounds as claimed in claim 1 of
        20 to 60% by weight A and
        80 to 40% by weight B.

3. Vulcanizates of the compounds claimed in claims 1 and 2.

## Revendications

1. Mélanges
    A) de 15 à 70 % en poids de polychloroprène et
    B) de 85 à 30 % en poids de caoutchouc nitrile hydrogéné,
    les indications de pourcentage se rapportant dans chaque cas à la somme des composants A) + B).

2. Mélanges suivant la revendication 1, constitué de
        20 à 60 % en poids de A et
        80 à 40 % en poids de B.

3. Vulcanisat produit à partir des mélanges suivant les revendications 1 et 2.

FIG.1

Zyklen 10³

Verhältnis HNBR/Polychloropren

MODUL (300 % Dehnung)

De Mattia, Rissbildstufe 3

EP 0 423 593 B1